Europäisches Patentamt

European Patent Office

Office européen des brevets

(11) Veröffentlichungsnummer: **0 339 725**

**A2**

(12) **EUROPÄISCHE PATENTANMELDUNG**

(21) Anmeldenummer: 89201027.3

(22) Anmeldetag: 21.04.89

(51) Int. Cl.⁴: **G11B 27/10 , G11B 23/04 , G11B 23/087**

(30) Priorität: 27.04.88 AT 1078/88

(43) Veröffentlichungstag der Anmeldung:
02.11.89 Patentblatt 89/44

(84) Benannte Vertragsstaaten:
**AT CH DE FR GB LI**

(71) Anmelder: **N.V. Philips' Gloeilampenfabrieken**
**Groenewoudseweg 1**
**NL-5621 BA Eindhoven(NL)**

(72) Erfinder: **Sahora, Karl**
**c/o INT. OCTROOIBUREAU B.V. Prof.**
**Holstlaan 6**
**NL-5656 AA Eindhoven(NL)**
Erfinder: **Schranz, Hans**
**c/o INT. OCTROOIBUREAU B.V. Prof.**
**Holstiaan 6**
**NL-5656 AA Eindhoven(NL)**
Erfinder: **Willmann, Werner**
**c/o INT. OCTROOIBUREAU B.V. Prof.**
**Holstlaan 6**
**NL-5656 AA Eindhoven(NL)**

(74) Vertreter: **Van Weele, Paul Johannes Frits et**
**al**
**INTERNATIONAAL OCTROOIBUREAU B.V.**
**Prof. Holstlaan 6**
**NL-5656 AA Eindhoven(NL)**

(54) **Aufzeichnungsgerät für einen angetriebenen Aufzeichnungsträger.**

(57) Ein Aufzeichnungsgerät (1) für einen antreibbaren, an mindestens einem geräteseitigen Abtastelement (48, 49) vorbeibewegbaren Aufzeichnungsträger (18) weist eine Markiervorrichtung (59) zum Anbringen von bestimmte Stellen am Aufzeichnungsträger anzeigenden Markierungen unterschiedlicher Art auf einem Markierzeichenträger (26) auf. Ein Markierelement (60) der Markiervorrichtung (59) ist entlang einer Linie (26a) geführt und zum Anbringen von Markierungen mit einer Verstelleinrichtung (88) senkrecht zu der Linie (26a) von dieser ausgehend in einer ersten Richtung (89) hin- und hergehend und in einer zu dieser ersten Richtung entgegengesetzten zweiten Richtung (90) hin- und hergehend verstellbar. Zum Anbringen von Markierungen einer ersten Art beziehungsweise einer zweiten Art sind mit dem Markierelement (60) am Markierzeichenträger (26) von der Linie (26a) nur in der ersten Richtung (89) beziehungsweise nur in der zweiten Richtung (90) quer abstehende Striche (118, 119) anbringbar. Zusätzlich sind zum Anbringen von Markierungen mindestens einer weiteren Art mit dem Markierelement (60) von der Linie (26a) sowohl in der ersten Richtung (89) als auch in zweiten Richtung (90) quer abstehende Striche (120, 121, 122) auf dem Markierzeichenträger (26) anbringbar.

Fig.5

Die Erfindung bezieht sich auf ein Aufzeichnungsgerät für einen antreibbaren, mit mindestens einem Abtastelement des Gerätes zusammenwirkenden, an dem Abtastelement vorbeibewegbaren Aufzeichnungsträger, das zum selektiven Anbringen von eine jeweilige Relativlage zwischen dem Aufzeichnungsträger und dem Abtastelement anzeigenden strichförmigen Markierungen unterschiedlicher Art auf einem Markierzeichenträger mit einer Markiervorrichtung versehen ist, die mindestens ein synchron zur Relativbewegung zwischen dem Aufzeichnungsträger und dem Abtastelement antreibbares, entlang einer Linie geführtes, zum Anbringen der strichförmigen Markierungen mit einer Verstelleinrichtung senkrecht zu der Linie von dieser ausgehend in einer ersten Richtung und in einer zu der ersten Richtung entgegengesetzten zweiten Richtung hin- und hergehend verstellbares Markierelement aufweist, wobei die Verstelleinrichtung das Markierelement zum Anbringen einer Markierung einer ersten Art in der ersten Richtung und zum Anbringen einer Markierung einer zweiten Art in der zweiten Richtung verstellt und als Markierungen der ersten und zweiten Art von der Linie je in einer von den beiden Richtungen quer abstehende Striche gebildet werden.

Bei einem im Handel erhältlichen bekannten Gerät dieser Art handelt es sich um ein Diktiergerät, in das eine ein Magnetband als Aufzeichnungsträger enthaltende Kassette einsetzbar ist. Die Kassette trägt an jeder ihrer beiden Hauptseiten einen magnetisch orientierbare Partikel enthaltenden, streifenförmigen Markierzeichenträger auf dem hier mit einem durch einen dünnen, stabförmigen Permanentmagneten gebildeten Markierelement einer geräteseitigen Markiervorrichtung durch Verstellen des Markierelementes mittels einer geräteseitigen Verstelleinrichtung strichförmige Markierungen anbringbar sind. Bei dem bekannten Gerät wird das Markierelement beim Antreiben des Magnetbandes synchron zu diesem entlang einer in Streifenlängsrichtung des Markierzeichenträgers verlaufenden Linie über den Markierzeichenträger bewegt, wobei das Markierelement einen in Streifenlängsrichtung verlaufenden Dauerstrich auf dem Markierzeichenträger anbringt. Bei dem bekannten Gerät sind als Markierungen einer ersten Art, die jeweils ein Diktatende auf dem Magnetband kennzeichnen, mit dem Markierelement durch eine einseitige Hin- und Herverstellung desselben von dem Dauerstrich ausschließlich in der ersten Richtung quer abstehende Striche auf dem Markierzeichenträger anbringbar. Als Markierungen einer zweiten Art, die jeweils eine Diktatstelle auf dem Magnetband kennzeichnen, zu der ein Diktierender eine spezielle Anweisung, wie beispielsweise eine Diktateinfügung oder eine Diktatkorrektur geben will, sind mit dem Markierelement durch eine andere einseitige Hin- und Herverstellung desselben von dem Dauerstrich ausschließlich in der zweiten Richtung quer abstehende Striche auf dem Markierzeichenträger anbringbar. Bei diesem bekannten Gerät sind die Möglichkeiten hinsichtlich des Anbringens von Markierungen auf einem Markierzeichenträger darauf beschränkt, daß nur die vorgenannten zwei Arten von Markierungen auf dem Markierzeichenträger anbringbar sind. Im Zuge der Verwendung eines solchen Gerätes hat sich dies als nachteilige Einschränkung herausgestellt, da sich ein Bedarf an weiteren Arten von Markierungen ergeben hat, die aber bei dem bekannten Gerät nicht möglich sind.

Die Erfindung hat sich daher zur Aufgabe gestellt, diesen Bedarf zufriedenzustellen und ein Gerät der eingangs angeführten Gattung so auszubilden, daß bei demselben mit dem Markierelement der Markiervorrichtung zumindest eine weitere, somit mindestens eine dritte Art von Markierungen auf dem Markierzeichenträger anbringbar sind. Dies wird erfindungsgemäß dadurch erreicht, daß zum Anbringen einer Markierung mindestens einer weiteren Art die Verstelleinrichtung das Markierelement unmittelbar aufeinanderfolgend in beiden Richtungen mindestens einmal verstellt, wobei als Markierung einer weiteren Art mindestens ein von der Linie in beiden Richtungen quer abstehender Strich gebildet wird. Hiedurch ist praktisch ohne zusätzlichen Aufwand mit den ohnehin vorhandenen Mitteln durch mindestens eine zweiseitige Hin- und Herverstellung des Markierelementes auf besonders einfache Weise erreicht, daß mit demselben zumindest eine weitere Art von Markierungen auf dem Markierzeichenträger anbringbar sind, die durch von der Linie, entlang der das Markierelement beim Antreiben des Aufzeichnungsträgers synchron zu letzterem fortbewegt wird, sowohl in der ersten Richtung als auch in der zu der ersten Richtung entgegengesetzten zweiten Richtung quer abstehende Striche gebildet sind. Solche weitere Markierungen sind auch einwandfrei optisch erkennbar und unterscheiden sich sehr deutlich von den Markierungen der bisher bekannten beiden Arten, die jeweils durch nur in einer der beiden Richtungen von der Linie quer abstehende Striche gebildet sind.

Als Markierung einer weiteren Art kann, wie vorstehend erwähnt, das Markierelement beispielsweise nur einen von der Linie sowohl in der ersten Richtung als auch in der zweiten Richtung quer abstehenden Strich auf dem Markierzeichenträger anbringen. Es hat sich aber auch als vorteilhaft erwiesen, wenn zum Anbringen einer Markierung einer weiteren Art die Verstelleinrichtung das Markierelement in beiden Richtungen mindestens zweimal in einem vorgegebenen Zeitabstand nacheinander verstellt, wobei als Markierung einer solchen weiteren Art mindestens zwei zueinander benachbarte, von der Linie in beiden Richtungen quer abstehende Striche gebildet werden. Eine solche Doppelstrich-Markierung ist besonders deutlich von den übrigen Einfachstrich-Markierungen unterscheidbar, wodurch diese Markierungen vorteilhafterweise leicht auf findbar sind. Eine solche Markierung kann aber auch aus drei oder mehreren von solchen in beiden Richtungen von der Linie quer abstehenden, zueinander benachbarten Strichen gebildet sein, wobei sich auf diese Art und Weise je nach Anzahl der Striche eine Vielzahl von Markierungsarten bilden lassen.

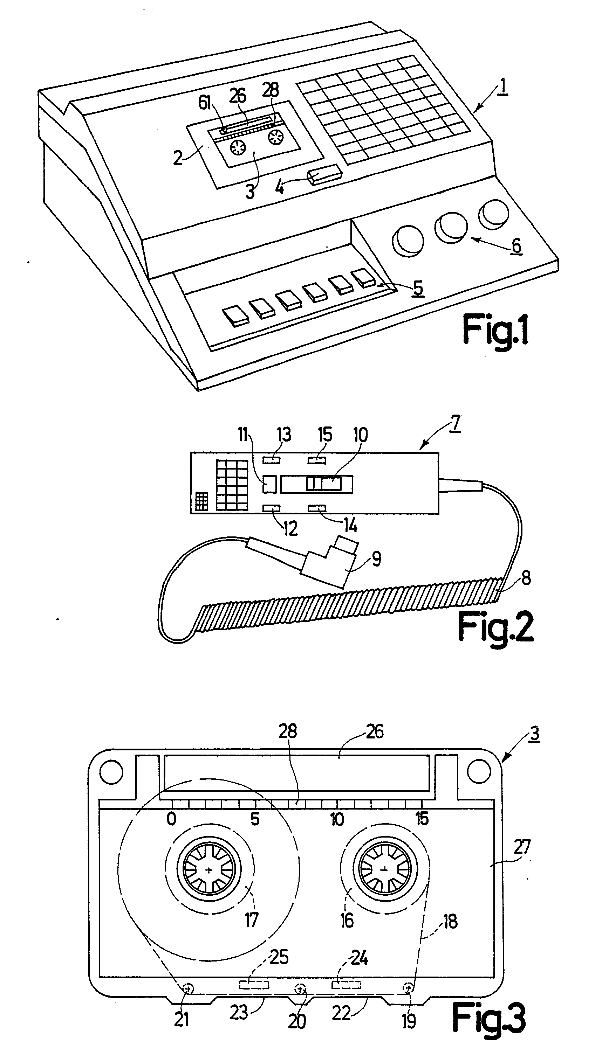

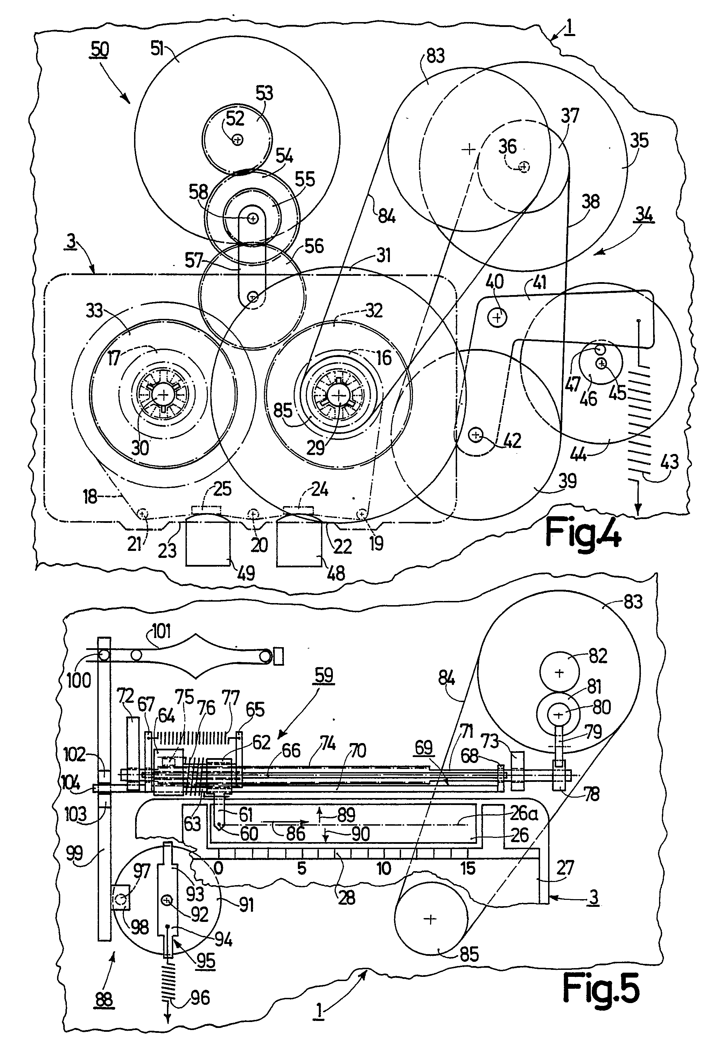

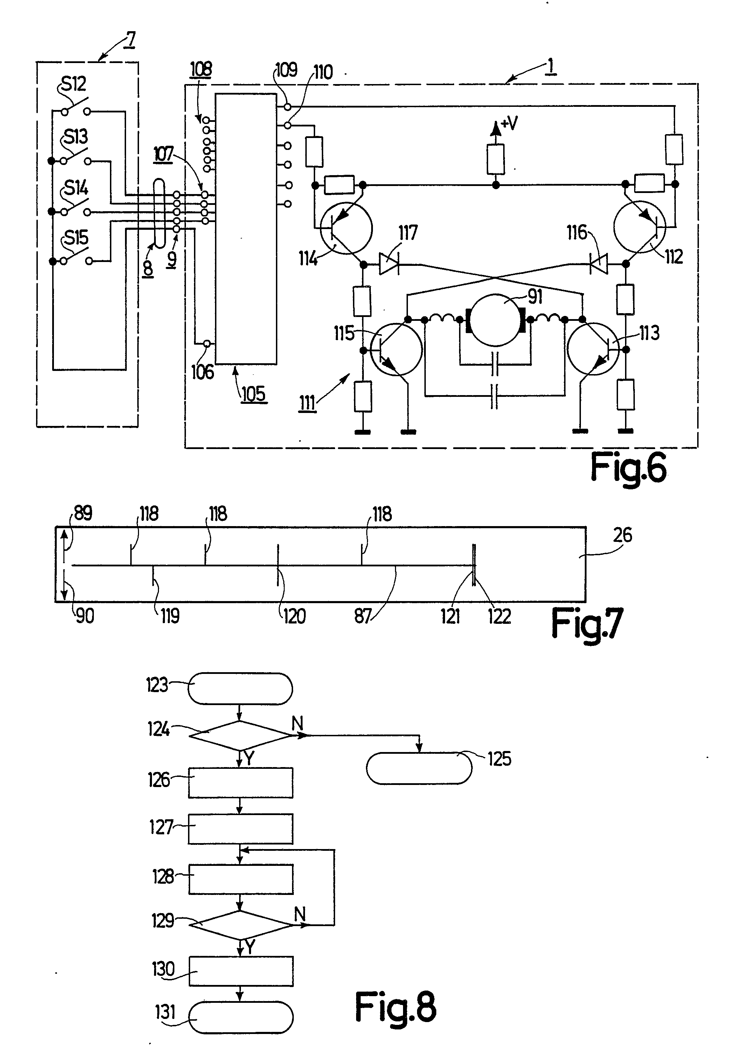

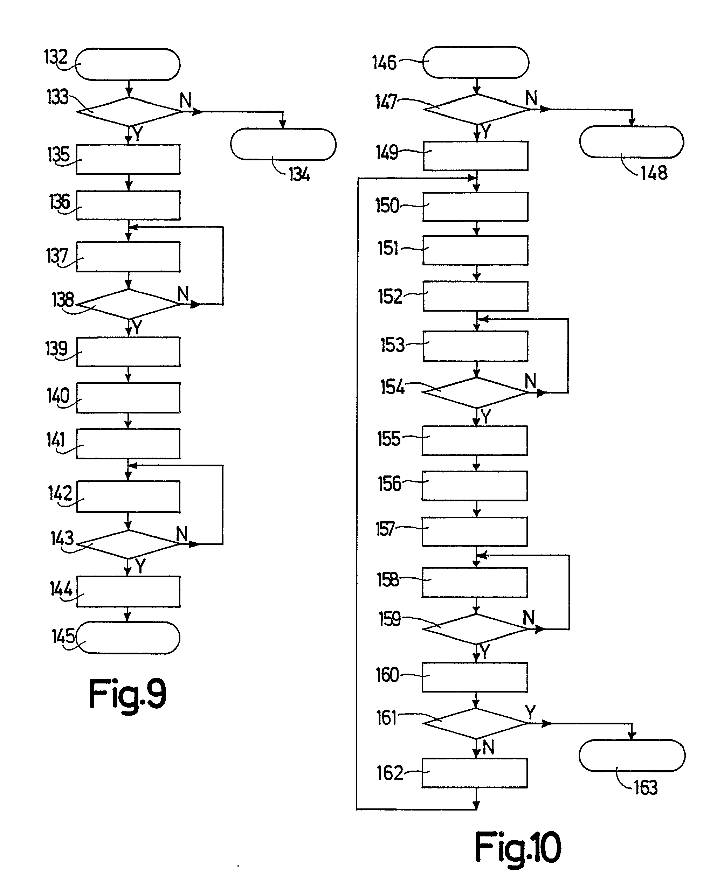

Die Erfindung wird im folgenden anhand eines in den Zeichnungen dargestellten Ausführungsbeispieles, auf das dieselbe jedoch nicht beschränkt sein soll, näher beschrieben. Die Fig.1 zeigt vereinfacht in perspektivischer Ansicht ein als Tischdiktiergerät ausgebildetes Aufzeichnungs- und Wiedergabegerät, in das eine ein Magnetband als Aufzeichnungsträger enthaltende Kassette einsetzbar ist, die an jeder ihrer beiden Hauptseiten einen streifenförmigen Markierzeichenträger aufweist. Die Fig.2 zeigt vereinfacht in Draufsicht ein an das Gerät gemäß Fig.1 anschließbares Fernsteuer-Mikrofon, das zusätzlich zu einer Mikrofon-Lautsprecher-Einheit auch Bedienungstasten zum ferngesteuerten Einschalten von Betriebsarten des Gerätes und zum Fernsteuern des Anbringens von Markierungen von vier unterschiedlichen Arten auf den an der Kassette angebrachten Markierzeichenträgern aufweist. Die Fig.3 zeigt in einem gegenüber der Fig.1 größeren Maßstab teilweise schematisch in Draufsicht eine in das Gerät gemäß Fig.1 einsetzbare Kassette. Die Fig.4 zeigt in einem gegenüber der Fig.1 größeren Maßstab schematisch in Draufsicht Antriebseinrichtungen des Gerätes gemäß Fig.1 zum Antreiben des in der Kassette untergebrachten Magnetbandes, um dasselbe in den Betriebsarten "Normaler Vorlauf " beziehungsweise "Schneller Vorlauf" und "Schneller Rücklauf" antreiben zu können. Die Fig.5 zeigt in einem gegenüber der Fig.1 größeren Maßstab schematisch in Draufsicht eine Markiervorrichtung des Gerätes gemäß Fig. 1, mit deren Markierelement auf den an der Kassette angebrachten Markierzeichenträgern Markierungen von vier unterschiedlichen Arten anbringbar sind, wobei das Markierelement zum Anbringen von Markierungen mit einer einen Verstellmotor aufweisenden Verstelleinrichtung verstellbar ist. Die Fig.6 zeigt schematisch Schaltungsteile des Gerätes gemäß Fig.1 und des Mikrofons gemäß Fig.2, wobei der Schaltungsteil des Gerätes einen Mikroprozessor enthält, mit dem unter anderem eine Steuerschaltung für den Verstellmotor der Verstelleinrichtung für das Markierelement der Markiervorrichtung gemäß Fig.5 ansteuerbar ist. Die Fig.7 zeigt in einem gegenüber den Figuren 3 und 5 größeren Maßstab einen an der Kassette gemäß Fig.3 angebrachten Markierzeichenträger, auf dem Markierungen aller vier voneinander unterschiedlichen Arten angebracht sind. Die Fig.8 zeigt ein Flußdiagramm eines Programmablaufes, der zum Anbringen einer Markierung einer ersten Art im Mikroprozessor des Schaltungsteiles gemäß Fig.6 abgearbeitet wird. Die Fig.9 zeigt ein Flußdiagramm eines anderen Programmablaufes, der zum Anbringen einer Markierung einer dritten Art im Mikroprozessor des Schaltungsteiles gemäß Fig.6 abgearbeitet wird. Die Fig. 10 zeigt ein Flußdiagramm eines weiteren Programmablaufes, der zum Anbringen einer Markierung einer vierten Art im Mikroprozessor des Schaltungsteiles gemäß Fig.6 abgearbeitet wird.

Die Fig.1 zeigt ein Tischdiktiergerät 1, das einen mit einem schwenkbaren Deckel 2 verschließbaren Kassettenaufnahmeraum aufweist, in den eine ein Magnetband enthaltende Kassette 3 einsetzbar ist. Zum Öffnen des Deckels 2 ist eine Drucktaste 4 vorgesehen, bei deren Niederdrücken eine Verriegelungseinrichtung für den Deckel 2 gelöst und der Deckel unter Federkraft geöffnet wird. Das Gerät 1 weist einen Tastensatz 5 mit sechs Tipptasten auf, mit denen Betriebsarten und Betriebsfunktionen des Gerätes 1 einschaltbar sind, beispielsweise die Betriebsarten "Normaler Vorlauf", "Schneller Vorlauf" und "Schneller Rücklauf". Durch das Betätigen der Tipptasten des Tastensatzes 5 sind einem Mikroprozessor des Gerätes 1 Signale zuführbar, die in demselben ausgewertet werden, wobei der Mikroprozessor entsprechend den ihm zugeführten Signalen Steuersignale an Geräteeinheiten, wie Antriebseinrichtung, Steuerschaltung, Verstärkerschaltung und dergleichen, abgibt, um die gewünschten Betriebsarten im Gerät einzuschalten und durchzuführen. Ferner weist das Gerät 1 einen Reglersatz 6 mit drei Drehreglern auf, mit denen Betriebsparameter des Gerätes 1, nämlich die Wiedergabe-Lautstärke, die Wiedergabe-Tonhöhe und die Wiedergabe-Bandgeschwindigkeit, einstellbar sind.

Die Fig.2 zeigt ein Fernsteuer-Mikrofon 7, das über ein Kabel 8 mit einem Stecker 9 verbunden ist, der in eine an der in Fig.1 nicht sichtbaren Seitenwand des Gerätes 1 vorgesehene Buchse einsteckbar ist, so daß auf diese Weise das Mikrofon 7 mit dem Gerät 1 verbindbar ist. Das Mikrofon 7 weist eine nicht dargestellte Mikrofon-Lautsprecher-Einheit zum elektroakustischen Umsetzen von Sprachsignalen auf. Ferner weist das Mikrofon 7 eine Schiebetaste 10 auf, die zwischen vier Stellungen verschiebbar ist und mit der entsprechend den vier Stellungen im Gerät 1 die Betriebsarten "Schneller Rücklauf", "Stop", "Normaler Vorlauf" und "Schneller Vorlauf" einschaltbar sind. Eine Drucktaste 11 ist zum Einschalten der Betriebsart "Aufnahme" im Gerät 1 vorgesehen. Ferner weist das Mikrofon 7 vier weitere Drucktasten 12, 13, 14 und 15 auf, durch deren Betätigung vier unterschiedliche Arten von Markierungen auf einem an der Kassette vorgesehenen Markierzeichenträger anbringbar sind, worauf im folgenden noch näher eingegangen ist. Die beim Betätigen der Schiebetaste 10 beziehungsweise der Drucktasten 11, 12, 13, 14 und 15 erzeugten Signale werden über das Kabel 8 und den Stecker 9 dem Gerät 1 zugeleitet und in diesem von dem darin vorgesehenen Mikroprozessor ausgewertet, der dementsprechende Steuersignale zum Einschalten und Durchführen der gewünschten Betriebsarten beziehungsweise Betriebsfunktionen abgibt.

Die Fig.3 zeigt eine in das Gerät 1 gemäß Fig.1 in zwei zueinander gewendeten Lagen einsetzbare Kassette 3. In der Kassette 3 sind zwei nebeneinanderliegende, rotierend antreibbare Wickelkerne 16 und 17 untergebracht, auf die ein Magnetband 18 aufwickelbar ist. Das Magnetband 18 ist gemäß Fig.3 von dem Wickelkern 16 über drei Bandführungen 19, 20 und 21 zu dem auf den Wickelkern 17 aufgewickelten Bandwickel geführt, wobei das gesamte Magnetband auf den Wickelkern 17 aufgewickelt ist. Im Bereich der Bandführungen 19, 20 und 21 verläuft das Magnetband 18 längs einer langen vorderen Seitenwand der Kassette 3, in der zwei Durchbrüche 22 und 23 vorgesehen sind, durch die hindurch zwei geräteseitige Magnetköpfe, nämlich ein Aufzeichnungs- und Wiedergabe-Magnetkopf und ein Lösch-Magnetkopf, mit dem Magnetband 18 in Abtastverbindung bringbar sind, wobei das Magnetband 18 mit Hilfe von zwei in Fig.3 nur schematisch angedeuteten, verstellbar gehaltenen Andruckfilzen 24 und 25 an die Kopfspiegelflächen der beiden Magnetköpfe angedrückt wird.

An jeder der beiden Hauptwände der Kassette 3 ist ein streifenförmiger Markierzeichenträger 26 und ein Etikett 27 durch Kleben angebracht. Der Markierzeichenträger 26 und das Etikett 27 an jeder Hauptseite ist dabei je einer von zwei in entgegengesetzten Richtungen mit den Magnetköpfen abtastbaren Spuren am Magnetband zugeordnet. Auf das Etikett 27 ist eine nicht dargestellte Beschriftung und eine parallel zum Markierzeichenträger 26 verlaufende Skala 23 aufgedruckt, deren Gesamtlänge der Gesamtlänge des Magnetbandes 18 entspricht, wobei die neben der Skala angegebenen Zahlenwerte Minutenwerte sind, die beim Antreiben des Magnetbandes in der Betriebsart "Normaler Vorlauf" verstreichen. Aus vorliegender Skala 28 ist erkennbar, daß bei der Kassette 3 fünfzehn Minuten verstreichen, wenn das gesamte Magnetband 18 in der Betriebsart "Normaler Vorlauf" von einem Wickelkern auf den anderen Wickelkern umgewickelt wird.

Bei dem Markierzeichenträger 26 handelt es sich um einen bekannten Träger mit magnetisch orientierbaren Partikeln zum Speichern und zum optischen Anzeigen von Markierungen. Je nachdem, ob die Partikel in einer von zwei etwa zueinander senkrecht verlaufenden Richtungen orientiert sind, erscheinen sie im einfallenden Licht entweder hell oder dunkel. Ein derartiges Orientieren kann selektiv mit einem freien Ende eines stabförmigen, in axialer Richtung magnetisierten, senkrecht zum Markierzeichenträger gehaltenen Permanentmagneten erfolgen, wodurch die betreffenden Partikel zufolge des im wesentlichen in senkrechter Richtung zur Trägerfläche verlaufenden Magnetfeldes ebenfalls in senkrechter Richtung zur Trägerfläche orientiert werden und sich dadurch von den Partikeln der Umgebung, die in der Ebene der Trägerfläche vororientiert sind, optisch unterscheiden, so daß eine Markierung sichtbar wird. Gelöscht kann eine solche Markierung dadurch werden, daß mit einem in der Ebene der Trägerfläche verlaufenden Magnetfeld alle Partikel wieder in der Ebene der Trägerfläche orientiert werden, was eine Vororientierung darstellt, wie sie auch angewendet wird, bevor auf einem Markierzeichenträger eine Markierung angebracht wird. Wie noch im folgenden beschrieben ist, weist eine Markiervorrichtung des Gerätes 1 als Markierelement einen dünnen, stabförmigen Permanentmagneten auf, mit dem auf dem Markierzeichenträger 26 mit magnetisch orientierbaren Partikeln strichförmige Markierungen angebracht werden können.

Die Fig.4 zeigt schematisch Antriebseinrichtungen des Gerätes 1 zum Antreiben des Magnetbandes 18, wobei die Kassette 3 schematisch mit strichpunktierten Linien angedeutet ist. Der Antrieb des Magnetbandes 18 erfolgt in den Betriebsarten "Normaler Vorlauf" und "schneller Vorlauf" ausschließlich durch Antreiben des Wickelkernes 16 und in den Betriebsarten "Schneller Rücklauf" ausschließlich durch Antreiben des Wickelkernes 17. Zum Antreiben der Wickelkerne 16 und 17 weist das Gerät 1 zwei drehbar gelagerte, rotierend antreibbare Wickeldorne 29 und 30 auf, die beim Einsetzen einer Kassette 3 in das Gerät 1 je nach Lage der Kassette durch eine der beiden Hauptwände der Kassette 3 hindurch mit den Wickelkernen 16 und 17 in Antriebsverbindung kommen. Der Wickeldorn 29 ist mit einem zu demselben koaxialen Reibrad 31 und mit einem zu demselben koaxialen Zahnrad 32 und der Wickeldorn 30 ist mit einem zu diesem koaxialen Zahnrad 33 drehfest verbunden, wobei die beiden Zahnräder 32 und 33 auf demselben axialen Niveau liegen. Das Reibrad 31 ist zum Antreiben des Wickeldornes 29 in der Betriebsart "Normaler Vorlauf" vorgesehen. Über das Zahnrad 32 ist der Wickeldorn 29 in der Betriebsart "Schneller Vorlauf" und über das Zahnrad 33 ist der Wickeldorn 30 in der Betriebsart "Schneller Rücklauf" antreibbar.

Zum Antreiben des Magnetbandes 18 in der Betriebsart "Normaler Vorlauf" ist eine Antriebseinrichtung 34 vorgesehen. Die Antriebseinrichtung 34 weist einen Antriebsmotor 35 auf, der auf seiner Motorwelle 36 ein Pesenrad 37 trägt. Von dem Pesenrad 37 ist über eine Pese 38 ein weiteres Pesenrad 39 antreibbar, das auf einem um eine Achse 40 verschwenkbaren, L-förmigen Verstellhebel 41 drehbar gelagert ist. Mit dem Pesenrad 39 ist eine Welle 42 drehfest verbunden, die durch entsprechendes Verstellen des Verstellhebels 41 mit dem zu dem Wickeldorn 29 koaxialen Reibrad 31 in Antriebsverbindung bringbar ist. Zum Verstellen des Verstellhebels 41, um die Welle 42 mit dem Reibrad 31 in Antriebsverbindung zu bringen, greift an demselben eine Verstellfeder 43 an. Zur Steuerung der Verstellung des Verstellhebels 41 ist ein Steuermotor 44 vorgesehen, der an seiner Motorwelle 45 eine Scheibe 46 trägt, an der ein Exzenterstift 47 vorgesehen ist, an dem sich der Verstellhebel 41 unter der Wirkung der Verstellfeder 43 abstützt, wenn sich die vom Steuermotor 44 antreibbare Scheibe 46 in ihrer in Fig.4 dargestellten Ruhelage befindet. Um die Welle 42 mit dem Reibrad 31 in Wirkverbindung zu bringen, wird die Scheibe 46 von dem Steuermotor 44 für etwa eine halbe Umdrehung angetrieben, wobei der Exzenterstift 47 vom Verstellhebel 41 abhebt und letzterer unter der Wirkung der Verstellfeder 43 im Uhrzeigersinn um seine Achse 40 verschwenkt wird, so daß die Welle 42 am Reibrad 31 zum Anliegen kommt.

In der Betriebsart "Normaler Vorlauf" wird das Pesenrad 37 von dem Antriebsmotor 35 mit einer vorgegebenen Drehzahl im Uhrzeigersinn angetrieben. Dabei wird von dem Pesenrad 37 über die Pese 38, das Pesenrad 39, die Welle 42 und das Reibrad 31 der Wickeldorn 29 und folglich der Wickelkern 16 entgegen dem Uhrzeigersinn angetrieben, wodurch das Magnetband 18 auf den Wickelkern 16 aufgewickelt wird und dabei entlang einem geräteseitigen Aufnahme- und Wiedergabe-Magnetkopf 48 und einem Lösch-Magnetkopf 49 vorbeibewegt wird. Während dieses Bandtransportes in der Betriebsart "Normaler Vorlauf" kann ein Aufzeichnen und Wiedergeben beziehungsweise ein Löschen von Diktaten erfolgen.

Zum Antreiben des Magnetbandes 18 in den Betriebsarten "Schneller Vorlauf" und "Schneller Rücklauf" ist das Gerät 1 mit einer weiteren Antriebseinrichtung 50 versehen. Die Antriebseinrichtung 50 weist einen weiteren Antriebsmotor 51 auf, der an seiner Motorwelle 52 ein Zahnrad 53 trägt. Mit dem Zahnrad 53 steht ein im Gerät 1 drehbar gelagertes erstes Zwischenzahnrad 54 ständig in Eingriff. Mit dem ersten Zwischenzahnrad 54 ist ein zu demselben koaxial angeordnetes zweites Zwischenzahnrad 55 drehfest verbunden. Mit dem zweiten Zwischenzahnrad 55 steht ein Abtriebszahnrad 56 ständig in Eingriff, das auf einem schwenkbaren Arm 57 drehbar gelagert ist, dessen Schwenkachse 58 koaxial zu den beiden Zwischenzahnrädern 54 und 55 angeordnet ist. Das Abtriebszahnrad 56 ist auf nicht näher dargestellte Weise mit einer lösbaren Arretierungseinrichtung in den Betriebsarten "Normaler Vorlauf" und "Stop" in einer in Fig.4 dargestellten Ruhelage festgehalten, in der das Abtriebszahnrad 56 mit keinem der beiden zu den Wickeldornen 29 und 30 koaxialen Zahnräder 32 und 33 in Antriebsverbindung steht. Wenn eine von den beiden Betriebsarten "Schneller Vorlauf" und "Schneller Rücklauf" eingeschaltet wird, dann wird das Abtriebszahnrad 56 von der Arretierungseinrichtung zum Verschwenken um die Achse 58 freigegeben, so daß dann das Abtriebszahnrad 56 mit einem von den beiden Zahnrädern 32 und 33 in Eingriff kommen kann.

In der Betriebsart "Schneller Vorlauf" wird das Zahnrad 53 vom weiteren Antriebsmotor 51 im Uhrzeigersinn angetrieben, so daß das Abtriebszahnrad 56 ebenfalls im Uhrzeigersinn rotiert und zufolge der Reibungsverhältnisse im Zahnradgetriebe mit dem Arm 57 entgegen dem Uhrzeigersinn verschwenkt wird und folglich mit dem mit dem Wickeldorn 29 koaxialen Zahnrad 32 in Eingriff kommt und das Zahnrad 32 und den Wickeldorn 29 und den Wickelkern 16 entgegen dem Uhrzeigersinn antreibt, wobei das Magnetband 18 in der Betriebsart "Schneller Vorlauf" auf den Wickelkern 16 aufgewickelt wird. Dabei ist die konstante Drehzahl des weiteren Antriebsmotors 51 so gewählt, daß das Magnetband 18 in der Betriebsart "Schneller Vorlauf" etwa zwanzigmal schneller fortbewegt wird als in der Betriebsart "Normaler Vorlauf". In der Betriebsart "Schneller Rücklauf" wird das Zahnrad 53 vom weiteren Antriebsmotor 51 entgegen dem Uhrzeigersinn angetrieben, so daß das Abtriebszahnrad 56 ebenfalls entgegen dem Uhrzeigersinn rotiert und demzufolge durch Verschwenken mit dem Arm 57 mit dem mit dem Wickeldorn 30 koaxialen Zahnrad 33 in Antriebsverbindung kommt und den Wickeldorn 30 und den Wickelkern 17 im Uhrzeigersinn antreibt, wobei das Magnetband 18 in der Betriebsart "Schneller Rücklauf" auf den Wickelkern 17 aufgewickelt wird. Dabei weist der weitere Antriebsmotor 51 dieselbe konstante Drehzahl auf wie in der Betriebsart "Schneller Vorlauf", so daß das Magnetband in der Betriebsart "Schneller Rücklauf" ebenso schnell wie in der Betriebsart "Schneller Vorlauf" fortbewegt wird.

An dieser Stelle sei erwähnt, daß sofort nach dem Einsetzen einer Kassette 3 in das Gerät 1 in demselben automatisch die Betriebsart "Schneller Rücklauf" eingeschaltet wird, um das Magnetband 18 zur Gänze auf den mit dem Wickeldorn 30 gekuppelten Wickelkern aufzuwickeln. Wenn dies erfolgt ist, wird die Betriebsart "Schneller Rücklauf" automatisch abgeschaltet. Auf diese Weise ist erreicht, daß vor jedem Diktat-Aufnahme- beziehungsweise Wiedergabevorgang im Gerät stets dafür gesorgt ist, daß sich das Magnetband 18 zur Gänze auf dem mit dem Wickeldorn 30 gekuppelten Wickelkern befindet. Dies ist im Hinblick auf die im nachfolgenden beschriebene Anzeige- und Markiervorrichtung wesentlich, mit der jeweils die von dem mit dem Wickeldorn 30 gekuppelten Wickelkern zu dem mit dem Wickeldorn 29 gekuppelten Wickelkern umgewickelte Magnetbandmenge anzeigbar ist, wobei diese Anzeige von einem Ausgangswert Null aus erfolgt, der jenem Zustand entspricht, bei dem sich die gesamte Magnetbandmenge auf den mit dem Wickeldorn 30 gekuppelten Wickelkern auf gewickelt befindet.

Im folgenden ist anhand der Fig.5 die vorerwähnte Anzeige-und Markiervorrichtung 59 des Gerätes 1 beschrieben, die nachfolgend kurz Markiervorrichtung genannt wird. Diese Markiervorrichtung erfüllt einerseits eine Anzeigefunktion, um den jeweiligen Bandlaufstand anzuzeigen, und andererseits zusätzlich eine Markierfunktion, um bestimmte Bandstellen wahlweise markieren und anzeigen zu können. Auf die zweitgenannte Funktion ist im folgenden näher eingegangen.

Mit der Markiervorrichtung 59 sind selektiv strichförmige Markierungen unterschiedlicher Art, die eine jeweilige Relativlage zwischen dem Magnetband 18 und dem Aufnahme- und Wiedergabe-Magnetkopf 48 anzeigen, jeweils auf einem der beiden an der Kassette 3 angebrachten Markierzeichenträger 26 anbringbar. Die Markiervorrichtung 59 weist ein Markierelement 60 auf, das durch einen dünnen, stabförmigen, in Stabrichtung magnetisierten Permanentmagneten gebildet ist, dessen Stabrichtung im wesentlichen senkrecht zur Ebene des Markierzeichenträgers 26 verläuft und der in seiner in Fig.5 dargestellten Betriebslage mit seinem der Kassette 3 zugewandten freien Ende auf dem Markierzeichenträger 26 aufliegt. Der stabförmige Permanentmagnet 60 ist in einen Zeiger 61 eingesetzt, der von einem blockförmigen Zeigerträger 62 absteht. Der Zeigerträger 62 ist mit einer ihn durchsetzenden Bohrung auf eine Hülse 63 schwenkbar aufgesetzt, die an ihrem einen Ende mit einem blockförmigen Hülsenträger 64 und an ihrem anderen Ende mit einem Arm 65 fest verbunden ist. Der Hülsenträger 64 und die Hülse 63 sowie der Arm 65 sind mit einer durchgehenden Bohrung versehen, mit der diese Teile auf eine Führungsstange 66 verschiebbar aufgesetzt sind. Die Führungsstange 66 ist mit ihren beiden Enden je in einen Schenkel 67 beziehungsweise 68 eines U-förmigen Bügels 69 eingesetzt, dessen Steg 70 die beiden Schenkel 67 und 68 miteinander verbindet. Der Bügel 69 ist mit seinen beiden Schenkeln 67 und 68 auf einer Welle 71, die gemäß Fig.5 unter der Führungsstange 66 liegt, schwenkbar gelagert. Die Welle 71 ist in zwei stationären Lagerlappen 72 und 73 drehbar gelagert. Die Welle 71 weist eine Gewindespindel 74 auf, mit der ein vom Hülsenträger 64 abstehender Fortsatz 75 über eine an demselben vorgesehene Verzahnung in Eingriff steht. Auf diese Weise ist von der Gewindespindel 74 über den Fortsatz 75 der Hülsenträger 64 samt der Hülse 63 und folglich der darauf schwenkbar gelagerte Zeiger 61 samt dem Markierelement 60 antreibbar, wobei während dieses Antriebes der Hülsenträger 64 samt der Hülse 63 und dem darauf schwenkbar gelagerten Zeiger 61 von der Führungsstange 66 geführt sind. Da die Führungsstange 66 parallel zur Streifenrichtung des Markierzeichenträgers 26 verläuft, ist das Markierelement 60 entlang einer parallel zur Streifenrichtung des Markierzeichenträgers 26 verlaufenden Linie 26a geführt, die in Fig.5 als strichpunktierte Linie dargestellt ist. Auf die Hülse 63 ist eine gewundene Schenkelfeder 76 aufgesetzt, die mit ihrem einen abgewinkelten freien Ende an dem Fortsatz 75 des Hülsenträgers 64 und mit ihrem anderen abgewinkelten freien Ende an dem Zeiger 61 angreift und dabei dafür sorgt, daß im normalen Betrieb der Markiervorrichtung 59 die Verzahnung des Fortsatzes 75 mit der Gewindespindel 74 in Eingriff bleibt und das Markierelement 60 auf den Markierzeichenträger 26 aufgelegt gehalten bleibt. An dem mit der Hülse 63 verbundenen Arm 65 greift eine Rückstellfeder 77 mit ihrem einen Ende an, die mit ihrem anderen Ende an dem Schenkel 67 des Bügels 69 befestigt ist. Eine Verstellung des Zeigers 61 mit dem Markierelement 60 aus der in der Fig.5 dargestellten Ausgangslage, in der der Zeiger 61 auf den Wert Null der Skala 28 zeigt, längs des Markierzeichenträgers 26 erfolgt entgegen der Kraft dieser Rückstellfeder 77.

Zum Antreiben der Welle 71 samt der Gewindespindel 74 ist mit der Welle 71 ein schrägverzahntes Zahnrad 78 drehfest verbunden, mit dem ein Schneckenrad 79 ständig in Eingriff steht. Das Schneckenrad 79 steht in Eingriff mit einer Schnecke 80, mit der ein zu derselben koaxiales Zahnrad 81 drehfest verbunden ist. Mit dem Zahnrad 81 kämmt ein weiteres Zahnrad 82, das mit einem zu demselben koaxial angeordneten Pesenrad 83 drehfest verbunden ist. Das Pesenrad 83 ist über eine Pese 84 mit einem weiteren Pesenrad 85 verbunden, das zu dem Wickeldorn 29 koaxial angeordnet und mit diesem drehfest verbunden ist, wie dies aus der Fig.4 ersichtlich ist. Die Übersetzungsverhältnisse sind bei vorliegendem Antrieb so gewählt, daß bei entgegen dem Uhrzeigersinn rotierendem Wickeldorn 29, wie dies in den Betriebsarten "Normaler Vorlauf" und "Schneller Vorlauf" der Fall ist, die Gewindespindel 74 den Zeiger 61 samt dem Markierelement 60 entgegen der Kraft der Rückstellfeder 77 in Richtung des Pfeiles 86 verstellt. Bei im Uhrzeigersinn rotierendem Wickeldorn 29, wie dies in der Betriebsart "Schneller Rücklauf" der Fall ist, wird der Zeiger 61 samt dem Markierelement 60 entgegen der Richtung des Pfeiles 86 von der Gewindespindel 74 angetrieben. Da der Antrieb des Markierelementes 60 von dem mit dem Wickelkern 16 gekuppelten Wickeldorn 29 her abgeleitet ist, erfolgt der Antrieb des Markierelementes 60 synchron zur Relativbewegung zwischen dem Magnetband 18 und dem Aufzeichnungs- und Wiedergabe-Magnetkopf 48. Beim Antreiben des Magnetbandes 18 wird das Markierelement 60 synchron zum Magnetband angetrieben, wobei das Markierelement auf dem Markierzeichenträger 26 längs der Linie 26a gleitet und einen in Längsrichtung des Markierzeichenträgers 26 verlaufenden Dauerstrich 87 am Markierzeichenträger anbringt, wie dies aus Fig.7 ersichtlich ist.

Zum Anbringen von Markierungen auf dem Markierzeichenträger 26 ist das Markierelement 60 mit einer Verstelleinrichtung 88 senkrecht zu der Linie 26a, entlang der das Markierelement geführt ist, im vorliegenden Fall also auch senkrecht zu dem Dauerstrich 87, von der Linie 26a ausgehend in einer ersten Richtung, die in der Fig.5 mit einem Pfeil 89 angegeben ist, und in einer zu der ersten Richtung entgegengesetzten zweiten Richtung, die in der Fig.5 mit einem Pfeil 90 angegeben ist, hin- und hergehend verstellbar. Die Verstelleinrichtung 88 weist einen Verstellmotor 91 auf, der auf seiner Motorwelle 92 einen zwei Arme 93 und 94 aufweisenden Hebel 95 trägt, an dessen einem Arm 94 eine im wesentlichen in Richtung des Hebels 95 ausgerichtete Rückstellfeder 96 angreift. Die beiden freien Enden der Arme 93 und 94 sind zum Zusammenwirken mit einem Stift 97 vorgesehen, der auf einem seitlich abstehenden Lappen 98 eines längsverschiebbar geführten Schiebers 99 der Verstelleinrichtung 88 angebracht ist. Der Schieber 99 ist über einen von demselben abstehenden Stift 100 von einer stationär im Gerät abgestützten Schenkelfeder 101 in seiner in Fig.5 dargestellten Ruhelage gehalten beziehungsweise nach einer Verstellung des Schiebers 99 mittels des Verstellmotors 91 von der Schenkelfeder 101 in diese Ruhelage rückstellbar. Der Schieber 99 weist ferner zwei abstehende Fortsätze 102 und 103 auf, zwischen denen ein quer zum Schieber 99 verlaufender Stift 104 liegt, der von dem Schenkel 67 des Bügels 69 seitlich absteht und mit diesem Schenkel 67 fest verbunden ist.

Zum Verstellen des Schiebers 99, um eine Markierung am Markierzeichenträger 26 anzubringen, wird der Verstellmotor 91 kurzzeitig an eine Versorgungsspannung V angeschaltet und in einer von seinen beiden Drehrichtungen kurzzeitig angetrieben, so daß einer von den beiden Armen 93 und 94 des vom Verstellmotor 91 angetriebenen Hebels 95 gegen den Stift 97 schlägt und dabei den Schieber 99 kurzzeitig verschiebt, wonach die Versorgungsspannung V wieder abgeschaltet wird und der Hebel 95 von der Rückstellfeder 96 und der Schieber 99 von der Schenkelfeder 101 in ihre Ruhelagen zurückverstellt werden. Beim Verstellen des Schiebers 99 mittels des Verstellmotors 91 wird über den Stift 104 der Bügel 69 um die Welle 71 so verschwenkt, daß über die Führungsstange 66, die Hülse 63 und den Zeiger 61 das Markierelement 60 ausgehend von der Linie 26a entgegen der jeweiligen Verstellrichtung des Schiebers 99 in einer von den beiden zueinander entgegengesetzten Richtungen 89 und 90 über einen vorgegebenen Hub verstellt wird. Bei einer solchen Verstellung gleitet das Markierelement 60 auf dem Markierzeichenträger 26 und bringt dabei eine die zum Zeitpunkt der Verstellung vorliegende Relativlage zwischen dem Magnetband 18 und dem Aufnahme- und Wiedergabe-Magnetkopf 48 anzeigende Markierung auf dem Markierzeichenträger 26 an. Beim Rückstellen des Schiebers 99 in seine Ruhelage mittels der Schenkelfeder 101 gleitet das Markierelement 60 an der bereits eine Markierung aufweisenden Stelle über den Markierzeichenträger, jedoch in der entgegengesetzten Richtung, wobei dieselbe Markierung nochmals angebracht wird. Es erfolgt somit eigentlich eine Doppelmarkierung an derselben Stelle des Markierzeichenträgers.

Zu erwähnen ist noch, daß beim Drücken der Taste 4 zum Öffnen des Deckels 2 für den Kassettenaufnahmeraum des Gerätes 1 über eine nicht dargestellte separate Verstelleinrichtung der Schieber 99 weiter als vom Verstellmotor 91 in Richtung des Pfeiles 90 verschoben und in seiner verschobenen Stellung gehalten wird, wobei dann der Zeiger 61 und die Hülse 63 samt dem Hülsenträger 64 über den Bügel 69 so weit von der Kassette in Richtung des Pfeiles 89 weg verschwenkt werden, daß sich der Zeiger 61 außerhalb des Entnahme- beziehungsweise Einsetzweges der Kassette befindet, so daß ein unbehindertes Entnehmen beziehungsweise Einsetzen einer Kassette erfolgen kann, und daß die Verzahnung am Fortsatz 75 außer Eingriff von der Gewindespindel 74 kommt, so daß die Rückstellfeder 77 über die Hülse 63 den Zeiger 61 in seine Ausgangslage zurückverstellen kann. Da dieses Detail im Zusammenhang mit der vorliegenden Erfindung nicht wesentlich ist, wurde keine zeichnerische Darstellung desselben in Fig.5 vorgenommen, um die Zeichnung einfacher zu halten.

Die Fig.6 zeigt einen im Zusammenhang mit der Erfindung wesentlichen Schaltungsteil des Gerätes 1 gemäß Fig.1 und einen in diesem Zusammenhang wesentlichen Schaltungsteil des Mikrofons gemäß Fig.2, wobei in Fig.6 das Gerät 1 und das an dasselbe über das Kabel 8 und den Stecker 9 anschließbare Mikrofon 7 mit strichlierten Linien angedeutet sind. Von den zum Anbringen von Markierungen zu drückenden Tasten 12, 13, 14 und 15 des Mikrofons 7 schließbare Schalter sind in korrespondierender Weise mit S12, S13, S14 und S15 bezeichnet. Im Gerät 1 ist ein Mikroprozessor 105 vorgesehen, der die Steuerung der Betriebsfunktionen und Betriebsarten des Gerätes durchführt. Ein Ausgang 106 des Mikroprozessors 105 ist über eine Leitung des Kabels 8 mit den Wurzeln aller Schalter S12 bis S15 verbunden. Über diesen Ausgang 106 gibt der Mikroprozessor zyklisch ein Abfragesignal an die Schalter S12 bis S15 ab, das bei einem geschlossenen Schalter über eine an den anderen Schalterkontakt jedes Schalters angeschlossene Leitung des Kabels 8 einem von einer Gruppe 107 von Eingängen des Mikroprozessors zugeleitet wird und im Mikroprozessor dahingehend ausgewertet wird, daß das Auftreten des Abfragesignales am betreffenden Eingang den geschlossenen Zustand des mit diesem Eingang verbundenen Schalters S12, S13, S14 beziehungsweise S15 signalisiert. Dem Mikroprozessor 105 sind an einer weiteren Gruppe 108 von Eingängen weitere Schalt- beziehungsweise Steuersignale zuführbar, beispielsweise jene von den Tipptasten des Tastensatzes 5. Der Mikroprozessor 105 weist zwei Ausgänge 109 und 110 auf, an die eine Steuerschaltung 111 für den Verstellmotor 91 der Verstelleinrichtung 88 zum Verstellen des Markierelementes 60 angeschlossen ist. Mit dieser Steuerschaltung 111 ist der Verstellmotor 91 an eine positive Versorgungsspannung V anschaltbar und ist die Drehrichtung des Verstellmotors 91 umschaltbar. Die Steuerschaltung besteht im wesentlichen aus vier Transistoren 112, 113, 114 und 115 und zwei Dioden 116 und 117. Um den Verstellmotor 91 von der Versorgungsspannung V abgeschaltet zu halten, sind die beiden Ausgänge 109 und 110 des Mikroprozessors auf ein hohes Potential H geschaltet. Dabei befinden sich die beiden Transistoren 112 und 114 in ihrem gesperrten Zustand und der Verstellmotor 91 steht still. Wenn der eine Ausgang 109 vom Mikroprozessor 105 auf ein niedriges Potential L geschaltet wird, dann werden die Transistoren 112 und 113 in den leitenden Zustand gebracht und es fließt von der Spannungsquelle V über den Transistor 112, die Diode 116, den Verstellmotor 91 und den Transistor 113 ein Motorstrom, der zur Folge hat, daß der Verstellmotor 91 den Hebel 95 entgegen dem Uhrzeigersinn antreibt. Wenn der andere Ausgang 110 vom Mikroprozessor 105 auf ein niedriges Potential L geschaltet wird, dann werden die beiden Transistoren 114 und 115 in den leitenden Zustand gebracht und es fließt von der Spannungsquelle V über den Transistor 114, die Diode 117, den Verstellmotor 91 und den Transistor 115 ein Motorstrom, der zur Folge hat, daß der Verstellmotor 91 den Hebel 95 im Uhrzeigersinn antreibt. Festzuhalten ist noch, daß der Mikroprozessor 105 neben den Ausgängen 109 und 110 weitere Ausgänge aufweist, über die der Mikroprozessor Betriebsfunktionen und Betriebsarten des Gerätes einschalten kann. Über einen dieser Ausgänge schaltet der Mikroprozessor im Gerät die Betriebsart "Normaler Vorlauf" ein, was unter anderem im Hinblick auf den Programmablauf gemäß Fig. 10 erwähnt ist.

Bei vorliegendem Gerät 1 sind nunmehr vorteilhafterweise mit der Markiervorrichtung 59 vier unterschiedliche Arten von Markierungen auf einem Markierzeichenträger 26 anbringbar. Diese vier unterschiedlichen Arten von Markierungen sind aus der Fig.7 ersichtlich. Zum Anbringen einer Markierung einer ersten Art verstellt die Verstelleinrichtung 88 das Markierelement 60 der Markiervorrichtung 59 von der Linie 26a ausgehend in der ersten Richtung 89 hin- und hergehend, wobei das Markierelement durch kurzzeitiges Einschalten des Verstellmotors 91 von der Linie 26a ausgehend zuerst in der ersten Richtung 89 von der Linie 26a beziehungsweise dem Dauerstrich 87 weg verstellt und sofort danach durch Abschalten des Verstellmotors 91 zu der Linie 26a beziehungsweise dem Dauerstrich 87 zurückverstellt wird und wobei das Markierelement 60 als Markierung der ersten Art einen von dem Dauerstrich 87 in der ersten Richtung 89 quer abstehenden Strich 118 auf dem Markierzeichenträger 26 anbringt. Zum Anbringen einer Markierung einer zweiten Art verstellt die Verstelleinrichtung 88 das Markierelement 60 von der Linie 26a ausgehend in der zweiten Richtung 90 hin- und hergehend, wobei das Markierelement durch kurzzeitiges Einschalten des Verstellmotors 91 von der Linie 26a ausgehend zuerst in der zweiten Richtung 90 von der Linie 26a beziehungsweise dem Dauerstrich 87 weg verstellt und sofort danach durch Abschalten des Verstellmotors 91 zu der Linie 26a beziehungsweise dem Dauerstrich 87 zurückverstellt wird und wobei das Markierelement 60 als Markierung der zweiten Art einen von dem Dauerstrich 87 in der zweiten Richtung 90 quer abstehenden Strich 119 auf dem Markierzeichenträger 26 anbringt. Diese beiden Arten von Markierungen sind bereits bekannt. Zum Anbringen einer neuen Markierung einer dritten Art verstellt die Verstelleinrichtung 88 das Markierelement 60 auf analoge Weise unmittelbar aufeinanderfolgend in beiden Richtungen 89 und 90 hin- und hergehend, und zwar in vorliegendem Fall ausgehend von der Linie 26a zuerst in der ersten Richtung 89 von der Linie 26a beziehungsweise dem Dauerstrich 87 weg und sofort danach zu der Linie 26a beziehungsweise dem Dauerstrich 87 zurück und so fort danach in der zweiten Richtung 90 von der Linie 26a beziehungsweise dem Dauerstrich 87 weg und sofort danach zu der Linie 26a beziehungsweise dem Dauerstrich 87 zurück, wobei das Markierelement 60 als neue Markierung der dritten Art einen von dem Dauerstrich 87 sowohl in der ersten Richtung 89 als auch in der zweiten Richtung 90 quer abstehenden Strich 120 auf dem Markierzeichenträger 26 anbringt. Zum Anbringen einer weiteren neuen Markierung einer vierten Art verstellt die Verstelleinrichtung 88 das Markierelement 60 auf analoge Weise unmittelbar aufeinanderfolgend in beiden Richtungen 89 und 90 hin- und hergehend zweimal in einem vorgegebenen Zeitabstand nacheinander, und zwar in vorliegendem Fall jedesmal ausgehend von der Linie 26a zuerst in der ersten Richtung 89 von der Linie 26a beziehungsweise dem Dauerstrich 87 weg und sofort danach zu der Linie 26a beziehungsweise dem Dauerstrich 87 zurück und sofort danach in der zweiten Richtung 90 von der Linie 26a beziehungsweise dem Dauerstrich 87 weg und sofort danach zu der Linie 26a beziehungsweise dem Dauerstrich 87 zurück, wobei das Markierelement 60 als neue Markierung der vierten Art zwei in Richtung des Dauerstrichs 87 mit dem vorgegebenen Zeitabstand entsprechendem Abstand nebeneinanderliegende, zueinander benachbarte, von dem Dauerstrich 87 sowohl in der ersten Richtung 89 als auch in der zweiten Richtung 90 quer abstehende Striche 121 und 122 auf dem Markierzeichenträger 26 anbringt. Somit sind bei vorliegendem Gerät mit der ohnehin vorhandenen Markiervorrichtung zusätzlich zwei neue Arten von Markierungen auf einem Markierzeichenträger anbringbar, die durch eine zweiseitige Auslenkung des Markierelementes mittels der hiefür entsprechend ausgebildeten und gesteuerten Verstelleinrichtung erhalten werden. Durch die Ausbildung der Markierungen als beidseitig von dem Dauerstrich quer abstehende Striche sind diese neuen Markierungen leicht und deutlich erkennbar und einwandfrei von den bekannten Markierungen unterscheidbar.

Markierungen der vorstehend angeführten Arten werden von einem Diktierenden zur Kennzeichnung von Diktaten beziehungsweise Diktatstellen am Markierzeichenträger angebracht. Markierungen der ersten Art kennzeichnen jeweils das Diktatende eines auf dem Magnetband gespeicherten Diktates, zu dem vom Diktierenden keine besonderen Hinweise, Wünsche oder Anforderungen hinsichtlich der Auswertung durch eine Schreibkraft abgegeben wurden. Eine solche Markierung der ersten Art wird dann auf dem Markierzeichenträger angebracht, wenn ein Diktatende eines solchen auf dem Magnetband gespeicherten Diktates dem Aufnahme- und Wiedergabe-Magnetkopf gegenüberliegt. Markierungen der zweiten Art kennzeichnen jeweils eine Diktatstelle eines auf dem Magnetband gespeicherten Diktates, zu der ein Diktierender eine spezielle Anweisung, wie eine Diktateinfügung, eine Diktatkorrektur oder einen das Diktat betreffenden beziehungsweise auch einen vom Diktat unabhängigen Wunsch, geben will beziehungsweise gegeben hat, die ebenfalls auf dem Magnetband oder aber auch auf einem separaten Speicherelement, wie einem weiteren Magnetband oder einem Notizzettel, gespeichert sein kann. Markierungen der dritten Art kennzeichnen jeweils das Diktatende eines auf dem Magnetband gespeicherten Diktates, dem vom Diktierenden hinsichtlich der Auswertung durch eine Schreibkraft besondere Wichtigkeit beziehungsweise zeitlicher Vorrang zugeordnet wurde; solche Diktate werden als sogenannte Prioritäts-Diktate bezeichnet. Markierungen der vierten Art kennzeichnen jeweils das Ende von einer auf dem Magnetband gespeicherten Gruppe zusammengehöriger Diktate, wobei diese Gruppe von Diktaten beispielsweise von einem einzigen Diktierenden stammt oder diese Gruppe von Diktaten sich auf ein zusammengehöriges Sachgebiet bezieht. Eine solche Gruppe zusammengehöriger Diktate kann auch dadurch gebildet sein, daß diese Diktate über ein Telefonnetz zu einem an das Telefonnetz anschließbaren Diktiergerät während eines einzigen ununterbrochenen Anrufes übertragen werden, wobei dann in diesem Diktiergerät nach Abschluß der Übertragung dieser Diktate und Beendigung des Anrufes automatisch die Anbringung einer Markierung der vierten Art ausgelöst wird.

Aufgrund der auf dem in Fig.7 dargestellten Markierzeichenträger 26 angebrachten Markierungen gemäß den vier vorstehend beschriebenen Arten ist bezüglich der Diktate, die auf der diesem Markierzeichenträger zugeordneten Spur eines Magnetbandes gespeichert sind, folgender Sachverhalt ablesbar. Auf dem Magnetband ist eine aus fünf zusammengehörigen Diktaten bestehende Diktatgruppe gespeichert, deren Ende mit der durch die beiden Striche 121 und 122 gebildeten Markierung der vierten Art gekennzeichnet ist. Beim dritten Diktat handelt es sich um ein Prioritäts-Diktat, dessen Ende mit der durch den Strich 120 gebildeten Markierung der dritten Art gekennzeichnet ist. Zu einer Diktatstelle des zweiten Diktates hat der Diktierende eine spezielle Anweisung beziehungsweise Instruktion gegeben; diese Diktatstelle ist mit der durch den Strich 119 gebildeten Markierung der zweiten Art gekennzeichnet. Beim ersten, vierten und fünften Diktat handelt es sich um Diktate, zu denen der Diktierende keine zusätzlichen Hinweise gegeben hat, wobei die Enden des ersten Diktates und des vierten Diktates je mit einer durch einen Strich 118 gebildeten Markierung der ersten Art gekennzeichnet sind. Eine Markierung der ersten Art am Ende des fünften Diktates ist nicht vorgesehen, da dort die durch die beiden Striche 121 und 122 gebildete Markierung der vierten Art angebracht ist.

Anhand der Figuren 8 bis 10 sind im folgenden Flußdiagramme von Progammabläufen beschrieben, die im Mikroprozessor 105 des Schaltungsteiles gemäß Fig.6 abgearbeitet werden, um Markierungen der vier vorstehend erläuterten Arten am Markierzeichenträger 26 anzubringen.

Der Programmablauf entsprechend dem Flußdiagramm gemäß Fig.8 wird im Mikroprozessor 105 abgearbeitet, um eine Markierung 118 einer ersten Art am Markierzeichenträger 26 anzubringen. Beim Block 123 wird dieser Programmablauf gestartet. Beim nachfolgenden Block 124 wird geprüft, ob der Schalter S12 geschlossen ist. Ist dies nicht der Fall, dann wird beim Block 125 zu einem anderen Programmablauf übergegangen. Ist dies jedoch der Fall, dann wird beim Block 126 der Ausgang 109 des Mikroprozessors 105 auf ein niedriges Potential L geschaltet. Hiedurch wird der Verstellmotor 91 so eingeschaltet, daß derselbe den Hebel 95 entgegen dem Uhrzeigersinn verschwenkt. Danach wird beim Block 127 der Zählerstand eines Zählers $Z_n$ auf den Wert Null gesetzt. Danach wird beim Block 123 der Zählerstand des Zählers $Z_n$ inkrementiert. Danach wird beim Block 129 geprüft, ob der Zählerstand des Zählers $Z_n$ den Wert N erreicht hat. Der Wert N ist so gewählt, daß dieser Wert jener Zeitdauer entspricht, für die der Verstellmotor 91 der Verstelleinrichtung 88 eingeschaltet wird. In der Praxis ist dieser Wert N so gewählt, daß der Motor für mehrere Millisekunden, beispielsweise fünfzig Millisekunden, eingeschaltet wird. Solange der Zählerstand des Zählers $Z_n$ den Wert N nicht erreicht hat, wird der Programmablauf neuerlich beim Block 128 fortgesetzt. Sobald der Zählerstand des Zählers $Z_n$ den Wert N erreicht hat, wird der Programmablauf beim Block 130 fortgesetzt. Beim Block 130 wird der Ausgang 109 des Mikroprozessors 105 wieder auf ein hohes Potential H geschaltet, so daß der Motor 91 abgeschaltet wird, wobei der Hebel 95 von der Rückstellfeder 96 und der Schieber 99 von der Schenkelfeder 101 zurückverstellt werden. Danach wird beim Block 131 der vorliegende Programmablauf beendet und auf einen anderen Programmablauf übergegangen.

Durch Abarbeiten dieses Programmablaufes wird der Verstellmotor 91 für die dem Wert N entsprechende Zeitdauer so eingeschaltet, daß der Arm 93 des Hebels 95 der Verstelleinrichtung 88 gegen den Stift 97 am Schieber 99 schlägt und den Schieber 99 verstellt, so daß demzufolge das Markierelement 60 ausgehend vom Dauerstrich 87 in Richtung des Pfeiles 89 von dem Dauerstrich 87 weg verschoben wird. Sofort danach wird der Verstellmotor 91 abgeschaltet und der Hebel 95 von der Rückstellfeder 96 in seine Ruhelage zurückverstellt und der Schieber 99 von der Schenkelfeder 101 in seine Ruhelage zurückverstellt, so daß das Markierelement 60 zu dem Dauerstrich 87 zurückverstellt wird. Während dieses Bewegungsablaufes des Markierelementes 60 bringt dasselbe auf dem Markierzeichenträger 26 einen in Richtung des Pfeiles 89 von dem Dauerstrich 87 quer abstehenden Strich 118 als Markierung der ersten Art an.

Zum Anbringen einer Markierung 119 der zweiten Art wird ein dem Programmablauf gemäß Fig.8 entsprechender Programmablauf abgearbeitet. Jedoch wird dann beim entsprechenden Block 124 geprüft, ob der Schalter 513 geschlossen ist, beim entsprechenden Block 126 der Ausgang 110 des Mikroprozessors auf ein niedriges Potential L geschaltet und beim entsprechenden Block 130 der Ausgang 110 des Mikroprozessors wieder auf ein hohes Potential H geschaltet. Hiedurch wird der Verstellmotor 91 für die dem Wert N entsprechende Zeitdauer so eingeschaltet, daß der Hebel 95 im Uhrzeigersinn verschwenkt wird und dessen Arm 94 gegen den Stift 97 am Schieber 99 schlägt und demgemäß der Schieber 99 verschoben wird, so daß das Markierelement 60 ausgehend von dem Dauerstrich 87 in Richtung des Pfeiles 90 von dem Dauerstrich 87 weg verstellt wird. Sofort danach wird der Verstellmotor 91 abgeschaltet und der Schieber 99 durch die Schenkelfeder 101 zurückverstellt, so daß das Markierelement 60 zu dem Dauerstrich 87 zurückverstellt wird. Während dieses Bewegungsablaufes des Markierelementes 60 bringt dasselbe auf dem Markierzeichenträger 26 einen in Richtung des Pfeiles 90 von dem Dauerstrich 87 quer abstehenden Strich 119 als Markierung der zweiten Art an.

Zum Anbringen einer Markierung 120 der dritten Art wird im Mikroprozessor 105 der Programmablauf entsprechend dem Flußdiagramm gemäß Fig.9 abgearbeitet. Beim Block 132 wird dieser Programmablauf gestartet. Beim Block 133 wird geprüft, ob der Schalter S14 geschlossen ist. Ist dies nicht der Fall, dann wird beim Block 134 auf einen anderen Programmablauf übergegangen. Ist dies jedoch der Fall, dann wird beim Block 135 der Ausgang 109 des Mikroprozessors 105 auf ein niedriges Potential L geschaltet. Hiedurch wird der Verstellmotor 91 so eingeschaltet, daß der Hebel 95 entgegen dem Uhrzeigersinn verschwenkt wird. Danach wird beim Block 136 der Zählerstand des Zählers $Z_n$ auf den Wert Null gesetzt. Danach wird beim Block 137 der Zählerstand des Zählers $Z_n$ inkrementiert. Danach wird beim Block 138 geprüft, ob der Zählerstand des Zählers $Z_n$ den Wert N erreicht hat. Solange der Zählerstand des Zählers

$Z_n$ den Wert N nicht erreicht hat, wird der Programmablauf neuerlich beim Block 137 fortgesetzt. Sobald der Zählerstand des Zählers $Z_n$ den Wert N erreicht hat, wird der Programmablauf beim Block 139 fortgesetzt. Beim Block 139 wird der Ausgang 109 des Mikroprozessors wieder auf ein hohes Potential H geschaltet, so daß der Verstellmotor 91 abgeschaltet wird, wobei der Hebel 95 von der Rückstellfeder 96 und der Schieber 99 von der Schenkelfeder 101 zurückverstellt werden. Sofort danach wird beim Block 140 der Ausgang 110 des Mikroprozessors 105 auf ein niedriges Potential L geschaltet, wodurch der Verstellmotor 91 so eingeschaltet wird, daß der Hebel 95 im Uhrzeigersinn verschwenkt wird. Danach wird beim Block 141 der Zählerstand des Zählers $Z_n$ wieder auf Null gesetzt. Danach wird beim Block 142 der Zählerstand des Zählers $Z_n$ inkrementiert. Danach wird beim Block 143 geprüft, ob der Zählerstand des Zählers $Z_n$ den Wert N erreicht hat. Ist dies nicht der Fall, wird der Programmablauf neuerlich beim Block 142 fortgesetzt. Ist dies jedoch der Fall, wird der Programmablauf beim Block 144 fortgesetzt. Beim Block 144 wird der Ausgang 110 des Mikroprozessors 105 auf ein hohes Potential H geschaltet. Dadurch wird der Verstellmotor 91 wieder abgeschaltet, wobei der Hebel 95 und der Schieber 99 wieder zurückverstellt werden. Danach wird beim Block 145 der Programmablauf beendet beziehungsweise auf einen anderen Programmablauf übergegangen.

Beim Abarbeiten des vorstehend beschriebenen Programmablaufes wird das Markierelement 60 ausgehend vom Dauerstrich 87 zuerst in Richtung des Pfeiles 89 von dem Dauerstrich 87 weg verstellt und sofort danach zu dem Dauerstrich 87 zurückverstellt und sofort danach in Richtung des Pfeiles 90 von dem Dauerstrich 87 weg verstellt und sofort danach wiederum zu dem Dauerstrich 87 zurückverstellt, wobei das Markierelement einen sowohl in Richtung des Pfeiles 89 als auch in Richtung des Pfeiles 90 vom Dauerstrich 87 quer abstehenden Strich 120 als Markierung der dritten Art auf dem Markierzeichenträger 26 anbringt, wie dies aus Fig.7 ersichtlich ist.

Zum Anbringen einer Markierung der vierten Art wird im Mikroprozessor 105 der Programmablauf entsprechend dem Flußdiagramm gemäß Fig. 10 abgearbeitet. Dieser Programmablauf wird beim Block 146 gestartet. Beim nachfolgenden Block 147 wird geprüft, ob der Schalter S15 geschlossen ist. Ist dies nicht der Fall, dann wird beim Block 148 zu einem anderen Programmablauf übergegangen. Ist dies jedoch der Fall, dann wird beim Block 149 der Zählerstand eines weiteren Zählers $Z_k$ auf den Wert Null gesetzt. Danach wird beim Block 150 der Zählerstand des weiteren Zählers $Z_k$ inkrementiert. Danach wird beim Block 151 der Ausgang 109 des Mikroprozessors 105 auf ein niedriges Potential L geschaltet, wodurch der Verstellmotor 91 den Hebel 95 entgegen dem Uhrzeigersinn verschwenkt. Danach wird beim Block 152 der Zählerstand des Zählers $Z_n$ auf den Wert Null gesetzt. Danach wird beim Block 153 der Zählerstand des Zählers $Z_n$ inkrementiert. Danach wird beim Block 154 geprüft, ob der Zählerstand des Zählers $Z_n$ den Wert N erreicht hat. Ist dies nicht der Fall, wird der Programmablauf neuerlich beim Block 153 fortgesetzt. Ist dies jedoch der Fall, dann wird beim Block 155 der Ausgang 109 des Mikroprozessors 105 auf ein hohes Potential H geschaltet, wodurch der Verstellmotor 91 wieder abgeschaltet und der Hebel 95 von der Rückstellfeder 96 in seine Ruhelage zurückverstellt wird. Sofort danach wird beim Block 156 der Ausgang 110 des Mikroprozessors 105 auf ein niedriges Potential L geschaltet, wodurch der Verstellmotor 91 den Hebel 95 im Uhrzeigersinn verschwenkt. Danach wird beim Block 157 der Zählerstand des Zählers $Z_n$ auf den Wert Null gesetzt. Danach wird beim Block 158 der Zählerstand des Zählers $Z_n$ inkrementiert. Danach wird beim Block 159 geprüft, ob der Zählerstand des Zählers $Z_n$ den Wert N erreicht hat. Ist dies nicht der Fall, wird der Programmablauf neuerlich beim Block 158 fortgesetzt. Ist dies jedoch der Fall, dann wird der Ausgang 110 des Mikroprozessors 105 auf ein hohes Potential H geschaltet, wodurch der Verstellmotor 91 abgeschaltet und der Hebel 95 von der Rückstellfeder 96 in seine Ruhelage zurückverstellt wird. Beim nachfolgenden Block 161 wird geprüft, ob der Zählerstand des weiteren Zählers $Z_k$ den Wert Zwei erreicht hat. Wenn dies nicht der Fall ist, wird beim Block 162 für eine vorgegebene Zeitdauer, in der Praxis hat sich eine Zeitdauer von etwa acht Sekunden als zweckmäßig erwiesen, vom Mikroprozessor über den betreffenden seiner weiteren Ausgänge im Gerät die Betriebsart "Normaler Vorlauf" eingeschaltet, wodurch der Zeiger 61 der Markiervorrichtung 59 um eine dieser vorgegebenen Zeitdauer entsprechende Strecke in Richtung des Pfeiles 86 bewegt wird und dabei der Dauerstrich 87 am Markierzeichenträger 26 verlängert wird. Nach dem Block 162 wird der Programmablauf neuerlich beim Block 150 fortgesetzt, so daß danach der Programmablauf ab dem Block 150 bis zum Block 161 wiederholt wird. Da bei dieser Wiederholung beim Block 150 der Zählerstand des weiteren Zählers $Z_k$ neuerlich inkrementiert wird, weist dann bei Erreichen des Blockes 161 der Zählerstand des weiteren Zählers $Z_k$ den Wert Zwei auf, so daß dann nach dem Block 161, bei dem nun festgestellt wurde, daß der Zählerstand des weiteren Zählers $Z_k$ den Wert Zwei erreicht hat, der Programmablauf beim Block 163 fortgesetzt wird, bei dem auf einen anderen Programmablauf übergegangen wird.

Durch Abarbeiten des Programmablaufes gemäß Fig. 10 werden von dem Markierelement 60 als Markierung der vierten Art zwei sowohl in der ersten Richtung 89 als auch in der zweiten Richtung 90 von dem Dauerstrich 87 abstehende, in Richtung des Dauerstriches 87 nebeneinanderliegende, zueinander benachbarte Striche 121 und 122 auf dem Markierzeichenträger 26 angebracht, wie dies aus Fig. 7 ersichtlich ist.

Die Erfindung ist nicht auf das vorstehend beschriebene Ausführungsbeispiel beschränkt. Beispielsweise können bei dem Gerät gemäß diesem Ausführungsbeispiel auch noch weitere Arten von Markierungen auf dem Markierzeichenträger angebracht werden, beispielsweise Markierungen, die je aus drei sowohl in der ersten Richtung als auch in der zweiten Richtung von dem Dauerstrich quer abstehenden, in Richtung des Dauerstriches nebeneinanderliegenden, zueinander benachbarten Strichen gebildet sind. Auch können am Gerät selbst Tasten zum Auslösen des Anbringens von Markierungen am Markierzeichenträger vorgesehen sein. Das Auslösen des Anbringens von Markierungen kann bei einer an das Telefonnetz anschließbaren Zentraldiktieranlage auch über das Telefonnetz ferngesteuert erfolgen, beispielsweise durch Wählen von vorgegebenen Ziffern oder Ziffernkombinationen, die in einem Mikroprozessor der Zentraldiktieranlage ausgewertet werden. Eine Markiervorrichtung kann auch so ausgebildet sein, daß das Markierelement nicht längs einer geraden Linie, sondern beispielsweise längs einer kreisbogenförmigen Linie geführt ist, wobei dann der Markierzeichenträger dementsprechend eine kreisbogenförmige Form aufweist. Eine Markiervorrichtung kann auch zwei Markierelemente aufweisen, von denen jedes einer Auslenkrichtung zugeordnet ist. Ein Markierzeichenträger muß nicht mit einer Kassette verbunden sein, sondern kann auch in einen geräteseitigen Halter für einen Markierzeichenträger auswechselbar einsetzbar sein. Auch kann der Markierzeichenträger selbst anders ausgebildet sein, beispielsweise als Papierstreifen, auf dem mit einem farbstiftartigen Markierelement strichförmige Markierungen aufzeichenbar sind. Die Verstellung des Markierelementes zum Anbringen von Markierungen muß nicht motorisch erfolgen, sondern kann auch von Hand aus mit Hilfe von händisch betätigbaren, unmittelbar am Gerät vorgesehenen Tasten erfolgen, was inbesondere bei Taschendiktiergeräten vorteilhaft ist. Bei dem Gerät gemäß dem vorstehend beschriebenen Ausführungsbeispiel handelt es sich um ein Aufzeichnungs- und Wiedergabegerät für einen als Magnetband ausgebildeten Aufzeichnungsträger, der in einer Kassette untergebracht ist. Die Erfindung ist aber auch bei anderen Aufzeichnungsgeräten einsetzbar, beispielsweise bei Geräten, in die mehrere je ein Magnetband als Aufzeichnungsträger enthaltende Kassetten einsetzbar sind, von denen jeweils eine in eine Aufzeichnungsposition im Gerät bringbar ist, oder bei Geräten für plattenförmige Aufzeichnungsträger.

## Ansprüche

1. Aufzeichnungsgerät 1 für einen antreibbaren, mit mindestens einem Abtastelement 48, 49 des Gerätes 1 zusammenwirkenden, an dem Abtastelement 48, 49 vorbeibewegbaren Aufzeichnungsträger 18, das zum selektiven Anbringen von eine jeweilige Relativlage zwischen dem Aufzeichnungsträger 18 und dem Abtastelement 48, 49 anzeigenden strichförmigen Markierungen unterschiedlicher Art auf einem Markierzeichenträger 26 mit einer Markiervorrichtung 59 versehen ist, die mindestens ein synchron zur Relativbewegung zwischen dem Aufzeichnungsträger 18 und dem Abtastelement 48, 49 antreibbares, entlang einer Linie 26a geführtes, zum Anbringen der strichförmigen Markierungen mit einer Verstelleinrichtung 88 senkrecht zu der Linie 26a von dieser ausgehend in einer ersten Richtung 89 und in einer zu der ersten Richtung 89 entgegengesetzten zweiten Richtung 90 hin- und hergehend verstellbares Markierelement 60 aufweist, wobei die Verstelleinrichtung 88 das Markierelement 60 zum Anbringen einer Markierung einer ersten Art in der ersten Richtung 89 und zum Anbringen einer Markierung einer zweiten Art in der zweiten Richtung 90 verstellt und als Markierungen der ersten und zweiten Art von der Linie 26a je in einer der beiden Richtungen 89, 90 quer abstehende Striche 118, 119 gebildet werden, **dadurch gekennzeichnet,** dass zum Anbringen einer Markierung mindestens einer weiteren Art die Verstelleinrichtung 88 das Markierelement 60 unmittelbar aufeinanderfolgend in beiden Richtungen 89, 90 mindestens einmal verstellt, wobei als Markierung einer weiteren Art mindestens ein von der Linie 26a in beiden Richtungen 89, 90 quer abstehender Strich 120, 121, 122 gebildet wird.

2. Gerät nach Anspruch 1, **dadurch gekennzeichnet,** dass zum Anbringen einer Markierung einer weiteren Art die Verstelleinrichtung 88 das Markierelement 60 in beiden Richtungen 89, 90 mindestens zweimal in einem vorgegebenen Zeitabstand nacheinander verstellt, wobei als Markierung einer solchen weiteren Art mindestens zwei zueinander benachbarte, von der Linie 26a in beiden Richtungen quer abstehende Striche 121, 122 gebildet werden.

Fig.1

Fig.2

Fig.3

EP 0 339 725 A2

Fig.4

Fig.5

2 − IV − PHO 88−501

**Fig.6**

**Fig.7**

**Fig.8**

Fig.9

Fig.10